(19) Europäisches Patentamt / European Patent Office / Office européen des brevets

(11) **EP 2 235 116 B1**

(12) **EUROPÄISCHE PATENTSCHRIFT**

(45) Veröffentlichungstag und Bekanntmachung des Hinweises auf die Patenterteilung:
**19.06.2013 Patentblatt 2013/25**

(21) Anmeldenummer: **09702669.4**

(22) Anmeldetag: **07.01.2009**

(51) Int Cl.:
**C09D 4/00** *(2006.01)*

(86) Internationale Anmeldenummer:
**PCT/EP2009/000024**

(87) Internationale Veröffentlichungsnummer:
**WO 2009/090003 (23.07.2009 Gazette 2009/30)**

(54) **SILIKAHALTIGE UV-VERNETZBARE HARDCOATBESCHICHTUNGEN MIT URETHANACRYLATEN**

UV CROSS-LINKABLE HARDCOAT COATINGS CONTAINING SILICA WITH URETHANE ACRYLATES

REVÊTEMENTS DURS RÉTICULABLES AUX UV CONTENANT DE LA SILICE ET DES ACRYLATES D'URÉTHANE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **16.01.2008 DE 102008004622**

(43) Veröffentlichungstag der Anmeldung:
**06.10.2010 Patentblatt 2010/40**

(73) Patentinhaber: **Bayer Intellectual Property GmbH 40789 Monheim (DE)**

(72) Erfinder:
• **HILDENBRAND, Karlheinz**
  **47802 Krefeld (DE)**
• **CAPELLEN, Peter**
  **47803 Krefeld (DE)**
• **KOCH, Eberhard**
  **51399 Burscheid (DE)**

(74) Vertreter: **BIP Patents**
**Bayer Intellectual Property GmbH**
**Creative Campus Monheim**
**Alfred-Nobel-Straße 10**
**40789 Monheim am Rhein (DE)**

(56) Entgegenhaltungen:
WO-A-03/000813     JP-A- 2007 313 872
US-A1- 2004 191 420     US-A1- 2005 203 202

• DATABASE WPI Week 200722 Thomson Scientific, London, GB; AN 2007-213181 XP002518952 & JP 2007 010829 A (OKURA IND CO LTD) 18. Januar 2007 (2007-01-18)
• DATABASE WPI Week 200635 Thomson Scientific, London, GB; AN 2006-343935 XP002518953 & WO 2006/049296 A (MITSUBISHI CHEM CORP) 11. Mai 2006 (2006-05-11)
• DATABASE WPI Week 200471 Thomson Scientific, London, GB; AN 2004-721105 XP002518954 & JP 2004 277596 A (NITTO DENKO CORP) 7. Oktober 2004 (2004-10-07)
• DATABASE WPI Week 200420 Thomson Scientific, London, GB; AN 2004-205734 XP002518955 & JP 2003 145689 A (TORAY IND INC) 20. Mai 2003 (2003-05-20)
• DATABASE WPI Week 200347 Thomson Scientific, London, GB; AN 2003-497964 XP002518956 & JP 2003 034761 A (NIPPON ARC KK) 7. Februar 2003 (2003-02-07)

**Beschreibung**

Die vorliegende Erfindung betrifft eine UV-vernetzbare Zusammensetzung, enthaltend

a) nicht modifizierte, protonierte Silika-Nanopartikel;

b) Urethanacrylat;

c) polares Lösungsmittel; und

d) UV-Initiatorsystem,

wobei der Gewichtsanteil an nicht modifizierten, protonierten Silika-Nanopartikeln den Gehalt an Urethanacrylat übersteigt und bezogen auf die Trockenmasse der Beschichtung mindestens 50.1 Gew% beträgt, die Verwendung der Zusammensetzung zum Beschichten von Substraten, sowie Substrate, die mit derartigen Rezepturen beschichtet sind.

Die Verbesserung der Eigenschaften von Beschichtungen durch Integration von Silika (Siliciumdioxid) ist vom Prinzip her schon seit Längerem bekannt. Hierbei können Beschichtungen durch Zumischen von Silkapartikeln beispielsweise hinsichtlich Abrieb, Kratzfestigkeit, thermische Verformbarkeit, Reflexionseigenschaften, Glanz, Antistatik, Entflammbarkeit, UV Beständigkeit, Nicht-Beschlagbarkeit mit Wasserdampf ("antifog" Eigenschaften), Benetzbarkeit mit Wasser und Chemikalienbeständigkeit verbessert werden. Wird dabei Silika in Form von Nanopartikeln (Teilchengrößen kleiner 100 nm) eingesetzt, so sollte es im Prinzip möglich sein, diese Eigenschaftsverbesserungen unter gleichzeitigem Erhalt, bzw. nur geringer Abschwächung der Transparenz zu erreichen. Wie die folgenden Literaturzitate zeigen, ist es bisher noch nicht gelungen, alle diese Eigenschaftsmerkmale oder auch nur eine größere Kombination dieser Merkmale in einem Lacksystem zu vereinigen. Letzteres ist ein Ziel der vorliegenden Anmeldung.

So hat es in der Vergangenheit nicht an Versuchen gemangelt, silikahaltige Beschichtungszusammensetzungen mit weiter verbesserten Gesamteigenschaften bezüglich obiger Merkmale bereitzustellen.

In der DE 103 11 639 A1 werden antistatisch ausgerüstete Formkörper sowie ein Verfahren zu deren Herstellung beschrieben. Zur Lösung der Aufgabe werden in diesem Zusammenhang Lacksysteme aus acrylathaltigen Bindemitteln, alkoholischen Lösemitteln, nanoskaligen elektrisch leitfähigen Metalloxiden, nanoskaligen inerten Partikeln wie Siliciumdioxid sowie optional weiteren Zusatzstoffen wie beispielsweise Dispergierhilfsmitteln beschrieben. Die mittlere Teilchengröße der eingesetzten inerten Nanopartikel beträgt 2 nm bis 100 nm, wobei diese in Gehalten von 0,1 Masse% bis 50 Masse% bezogen auf den Trockenfilm eingesetzt werden.

In der JP 61-181809 wird eine UV-härtbare Zusammensetzung für Beschichtungen mit guten Haftungseigenschaften sowie hoher Abriebfestigkeit aus $\alpha,\beta$-ungesättigten Carbonsäuren, und kolloidalen Siliciumdioxidpartikeln, dispergiert in Wasser oder niederwertigen Alkoholen, offenbart.

Die JP 2005-179539 beschreibt "anti fog" Beschichtungen aus 20 Gew% bis 99 Gew% eines Gemisches, welches aus 0 Gew% bis 80 Gew% feinskaligen Partikeln, zum Beispiel Siliciumdioxid, und 100 Gew% bis 20 Gew% eines Kunststoffs besteht sowie 0,5 Gew% bis 30 Gew% eines Sulfosuccinates mit zwei anionischen Substituenten.

Lackzusammensetzungen auf der Basis polyfunktionaler Acrylsäureester zur Herstellung von Beschichtungen von hoher Transparenz, Witterungsstabilität und Kratzfestigkeit sind in der EP 0 050 996 beschrieben. Die Zusammensetzungen enthalten neben den genannten Acrylsäurederivaten einen Polymerisationsinitiator sowie anorganische Füllstoffe wie zum Beispiel Siliciumdioxid mit mittleren Teilchendurchmessern zwischen 1 nm und 1 $\mu$m sowie mit einem Brechungsindex von 1,40 bis 1,60.

In US 4,499,217 werden wasserfreie Lackzusammensetzungen aus kolloidalem Siliciumdioxid mit mittleren Teilchendurchmessern von 10 $\mu$m bis 50 $\mu$m und thermisch aushärtenden Verbindungen, beispielsweise acrylischen Verbindungen, beschrieben. Die ausgehärteten Beschichtungen zeigen eine gute Abriebfestigkeit sowie ein gutes Haftvermögen auf Substraten.

Die JP 2001-019874 offenbart Zusammensetzungen aus (Poly)ethylenglycol(poly)methylmethacrylat, Acrylamiden, Photoinitiatoren, Dispergierhilfsmitteln und Silika zur Herstellung von Beschichtungen mit hohem Haftungsvermögen und erhöhter Kratzfestigkeit.

WO 2006/049008 beschreibt eine hydrophile Beschichtung auf der Basis von Silikapartikeln, die in einem hochsiedenden Lösemittel, wie N,N-Dimethylacetamid, suspendiert, mit einer alkoholischen Lösung eines nichtionischen Tensids (L-77) versetzt und anschließend 10 Min. bei 100 °C getempert werden. Die Beschichtung führt zu einer hydrophilen Oberfläche, wobei mit Wasser Randwinkel von 20° bzw. kleiner erreicht werden können. Angewandt wird dieses Verfahren zur Beschichtung von Brillengläsern im Hinblick auf "anti fog" Eigenschaften. Dagegen sind diese Bedingungen für Beschichtungen von Kunststoffsubstraten wegen deren Empfindlichkeit gegen die hier verwendeten Lösemittel ungeeignet.

Eine Gießrezeptur bestehend aus einem Gemisch einer organischen Lösung von Polyvinylbutyral und einer alkoholischen Suspension von kolloidalem Silika ist in US 4,383,057 beschrieben. Bzgl. Trockenmasse kann die Zusammensetzung aus 20 Gew% bis 95 Gew% Polyvinylbutyral und 80 Gew% bis 5 Gew% Silika bestehen. Hinsichtlich Verbesserung der Stabilitätswerte, wie Kratzfestigkeit, chemische Beständigkeit und Entflammbarkeit wird das Polymer Polyvinylbutyral quervernetzt, wozu beispielsweise mit Alkylethern modifizierte Methylolmelanine eingesetzt werden. Keine näheren Angaben werden bzgl. Oberflächeneigenschaften, wie Hydrophilie oder Wasser-Randwinkel gemacht. Im Vergleich zur vorliegenden Anmeldung handelt es sich nicht UV-vernetzbare Rezepturen.

Sollen, wie in WO 2006/048277 beschrieben, Oberflächen mit besonders hohen und dichten Silikastrukturen erzeugt werden, so erfolgt die Abscheidung von Silika häufig lokal durch Flammhydrolyse aus Silikavorstufen, beispielsweise aus Hexamethyldisilazan oder Tetraethoxysilan. Durch Integration von Fluoralkylsilanen kann der hydrophobe Charakter dieser Beschichtungen noch verstärkt werden.

Die EP 0 337 695 offenbart Siliciumdioxid-Dispersionen zur abriebfesten Beschichtung fester, insbesondere transparenter Substrate. Die Dispersionen enthalten kolloidales Siliciumdioxid mit Partikelgrößen kleiner 100 nm, bevorzugt kleiner 75 nm, besonders bevorzugt kleiner 50 nm, dispergiert in einem protisch substituierten Ester oder Amid einer Acryl- oder Methacrylsäure. Hierbei werden 0,1 bis 2,5 Gewichtsteile Siliciumdioxid pro Gewichtsteil an eingesetztem ungesättigtem Monomer verwendet. Die Dispersionen lassen sich nach Zugabe eines Photoinitiators durch UV-Strahlung auf geeigneten Substraten aushärten.

EP 0 505 737 beschreibt UV vernetzbare Acrylatsysteme, die Methacrylat-funktionalisierte kolloidale Silika Nanopartikel enthalten. Die entsprechenden Lacke zeigen neben hervorragenden Bewitterungseigenschaften gute Abriebwerte, bspw. Taber Haze von 6-8 % bei 500 Zyklen. Bei den Methacrylat-funktionalisierten Silika Nanopartikeln handelt es sich um Produkte, die aus Methacryloylpropyltrimethoxysilan und kolloidalen Silika Nanopartikeln hergestellt werden. Mittlerweile sind Acrylat-modifizierte Silika Nanopartikel auch kommerziell, bspw. unter dem Namen "Nanocryl" von der Fa. Nanoresins oder "Highlink Nano" von der Fa. Clariant, erhältlich.
Diese Produkte, die als "anti-scratch" und anti-abrasion" Additive angeboten werden, sind wegen der komplexen Chemie in ihren Eigenschaften nicht sehr eng definiert.

Da in JP 2007-313872 A beschriebene Polymer ist ein Silikon-Oligomer, welches Acryloyl-Gruppen und eine Silanol-Gruppe enthält, wobei die Silika-Partikel chemisch an das Silikonmolekül gebunden sind. Eine Zusammensetzung aus protonierten Silika-Nanopartikeln und Urethanacrylat geht aus diesem Dokument nicht hervor.

JP 2007-010 829 A beschreibt einen Antireflexionsfilm, der Urethanacrylate, Photoinitiator, Fluor enthaltende Copolymere und Silika-Mikropartikel enthält.

WO 2006/049296 A beschreibt Zusammensetzungen, die Oberflächen behandeltes Silika enthalten.

US 20051203202 A1 beschreibt eine Reihe von Coating-Compositions, die einen Nanofiller in einer Menge von 5 - 30 Gew.% enthalten , der Gehalt an Monomeren 50 - 60 % beträgt und der Gehalt des Oligomers 15 -40 Gew. % beträgt (bezogen auf den Feststoffgehalt).

US 2004/191420 A1 beschreibt eine mikroporöse Platte, die mit einem Schutzlack versehen wird. Es wird erwähnt, dass als Pigment in der Lackschicht Silika eingesetzt werden kann, Mengenangaben sind nicht beschrieben.

JP 2004-277596 A beschreibt gehärtete Filme enthaltend Siloxan-Oligomere und fluorhaltige Verbindungen.

JP 2003-145689 A beschreibt einen laminierten Film aus einer Urethanacrylat haltigen Schicht und einer zweiten Schicht, die Silika, jedoch kein Urethanacrylat enthält.

WO 20031000813 A1 beschreibt Carbamat- und/oder Allophanatgruppen enthaltende härtbare Gemische. Als Rheofogiehilfsmittel können Siliziumdioxide in einer Teilchengröße von 2 - 20 $\mu$m eingesetzt werden.

JP 2003-034761 A beschreibt eine Kratzfestbeschichtung, die kolloidale Silika-Partikel und kristalline Silika-Mikropartikel enthält.

Eine Aufgabe der vorliegenden Erfindung ist daher die Bereitstellung von hochtransparenten Hardcoatsystemen, die sehr gute Kratzfestigkeit, Abriebwerte und Bewitterungseigenschaften bei gleichzeitig niedriger Trübung aufweisen und auf verschiedenen Substraten sehr gut haften. Die Trübung, bestimmt über die Haze (H) Werte nach ASTM 1003-00, soll kleiner 1%H bevorzugt kleiner 0.6%H sein. Die Abriebwerte, bestimmt nach ASTM 1003-00, sollen nach 1000 Abreibezyklen kleiner als 12%H bevorzugt kleiner als 8%H besonders bevorzugt kleiner 6%H sein. Die Haftung, bestimmt nach der Gitterschnitt Methode, soll ISO Kennzahlen von kleiner 2, bevorzugt kleiner 1 und besonders bevorzugt von 0 aufweisen. Diese Lackeigenschaften sollen insbesondere auch nach einem mehrstündigen Kochtest, bspw. 2 bis 4 h in kochendem Wasser, Wasserlagerung bei erhöhter Temperatur über einen längeren Zeitraum, sowie nach Bewitterungstests, bspw. künstliche Belichtung/Bewitterung im Xenon-WOM (Weather-Ometer®) nach ASTM G 26, G 151 oder G 155, erhalten bleiben. Daneben sollen in die erfindungsgemäßen Beschichtungen möglichst viele der eingangs erwähnten Eigenschaften, wie antifog, Antistatik, Hydrophilie und Chemikalienbeständigkeit implementierbar sein.

Insbesondere für Hardcoatsystemen mit hydrophilen Oberflächeneigenschaften, welche das aufgabengemäße Eigenschaftsbild zeigen, besteht gegenüber dem Stand der Technik weiterhin ein erhöhter Bedarf an der Bereitstellung geeigneter Rezepturen.

Darüber hinaus sollen diese Oberflächen als Primerschicht für weitere Beschichtungen, insbesondere aus wässrigen Lösungen, welche zum Beispiel kationischen Verbindungen enthalten, dienen können.

Es wurde überraschenderweise gefunden, dass die meisten der gewünschten Anforderungsprofile mit dem erfindungsgemäßen System in hohem Maße erreicht werden können.

Die vorliegende Erfindung betrifft daher eine UV-vernetzbare Zusammensetzung, enthaltend

a) nicht modifizierte, protonierte Silika-Nanopartikel;

b) Urethanacrylat;

c) polares Lösungsmittel; und

d) UV-Initiatorsystem,

wobei der Gewichtsanteil an nicht modifizierten, protonierten Silika-Nanopartikeln den Gehalt an Urethanacrylat übersteigt und bezogen auf die Trockenmasse der Beschichtung mindestens 50.1 Gew% beträgt.

Bei der Komponente a), den nicht modifizierten Silika Nanopartikeln, handelt es sich um protonierte, in polaren, vzgw. organischen Lösemitteln dispergierte Siliciumdioxid-Nanopartikel (Silika Nanopartikel), die aufgrund der freien SiOH Gruppen einen sauren pH Wert aufweisen. Insbesondere handelt sich um sphärische $SiO_2$ Teilchen mit Durchmessern von 1 nm bis ca. 100 nm, wobei vzgw. Partikel mit Teilchengrößen von kleiner 50 nm, besonders bevorzugt von kleiner 30 nm eingesetzt werden. Es können auch Gemische von Silika Nanopartikeln mit unterschiedlichen Teilchengrößen eingesetzt werden.

Derartige Silika Nanopartikel werden von verschiedenen Firmen, wie Nissan oder Clariant, als Dispersion in polaren organischen Lösemitteln in verschiedenen Teilchengrößen angeboten. Bspw. bietet die Fa. Nissan Teilchengrößen von 10 nm bis zu 100 nm in verschiedenen polaren Lösemitteln, wie Methanol, Isopropanol, Ethylenglykol, Methylethylketon, Methylisobutylketon, Propylenglykol, Ethylenglykol-n-propylether, Propylenglykolmonomethyletheracetat oder N,N-Dimethylacetamid an.

Eine bevorzugt eingesetzte Silika Nanopartikel Dispersion ist die Type Organosilikasol®IPA ST der Fa. Nissan. Es handelt sich hierbei um eine 30 gew.%ige Silika Dispersion in Isopropanol, die Teilchengrößen liegen bei 10-15 nm, der Wassergehalt wird mit< 1% angegeben, die Viskosität liegt bei < 15 mPas, die spezifische Dichte bei 0.98-1.02 und der pH Wert wird mit 2-4 spezifiziert. Es ist auch leicht möglich, durch destillativen Lösemittelaustausch oder über Membranverfahren an sich verfügbare Silika Dispersionen in ein anderes Dispergiermedium zu überführen. Bspw. kann die eben erwähnte Type Organosilikasol®IPA ST durch Zusetzen von Diacetonalkohol (DAA, 4-Hydroxy-4methyl-2-pentanon) und Abdestillieren des niedriger siedenden Isopropylalkohols leicht in eine Diacetonalkohol (DAA) basierte Dispersion überführt werden.

Eine andere bevorzugt eingesetzte Silika Nanopartikel Dispersion der Fa. Clariant trägt die Bezeichnung HIGHLINK®Nano G 401, die folgendermaßen spezifiziert ist: Partikelgröße: 13 nm, $SiO_2$ Gehalt: 30 Gew% und Viskosität < 100 mPas, Dichte: 1,1 g/cm³, das Dispergiermedium ist Ethylenglykol-n-propylether (Propylglykol) und der pH Wert liegt nach eigenen Messungen bei 4.

Neben den protonierten Silika Partikeln in polaren organischen Lösemittel bietet die Fa. NALCO unter dem Namen Nalco® 1034A auch Wasser basierte, protonierte Silika Partikel mit 20 nm Teilchengröße und einem pH Wert von 3 an.

Es ist auch möglich, die eben beschriebenen organisch basierten Silika Nanopartikel Dispersionen, ausgehend von wässrigen, Alkali stabilisierten Silika-Nanopartikel Dispersionen auf einfache Weise selbst im Labor herzustellen. Bei den wässrigen, Alkali stabilisierten Silika Dispersionen handelt es sich um äußerst preisgünstige, gut verfügbare Produkte, die von verschiedenen Herstellern bspw. unter den Produktnamen Levasil®, Ludox® oder Nalco® in unterschiedlichen Partikelgrößen angeboten werden. Diese Alkali stabilisierten Dispersionen weisen einen pH Wert von 9 bis 10 auf und sind in dieser Form für die erfindungsgemäßen Formulierungen wegen des Wassergehaltes und des hohen pH Wertes ungeeignet. Sie können jedoch, wie im folgenden Beispiel beschrieben, mit Hilfe von Kationenaustauschern und destillativem Lösemittel Austausch elegant in die entsprechende protonierte Form in polare organische Lösemittel überführt werden:

500,00 g Levasil 300®/30% (wässrige, Na+ stabilisierte Silika Nanopartikel Suspension, 30 Gew%, 300 m²/g, pH 10, H.C. Starck, Deutschland) wurden mit 250 g Lewatit S 100® (saurer Kationenaustauscher in H-Form) versetzt. Die Suspension wurde 1 h mit Hilfe eines Magnetrührers gerührt und anschließend durch Filtration über ein Papierfilter vom Ionentauscher abgetrennt. Das Filtrat wurde mit 100,00 g Diacetonalkohol (DAA, 4-Hydroxy-4-methyl-2-pentanon) versetzt.

Mit Hilfe eines Rotationsverdampfers wurde bei einem Unterdruck von ca. 15-20 mbar Wasser abdestilliert. Nachdem 300 ml Destillat erhalten worden waren, wurden nochmals 200,00 g Diacetonalkohol zugesetzt und weiter im Vakuum eingeengt. Der Eindampfprozess wurde, kontrolliert durch eine Feststoff-Gehalt Analyse, solange durchgeführt, bis eine 30 Gew% ige Suspension in Diacetonalkohol erhalten wurde. Der Wassergehalt, bestimmt nach Karl Fischer, betrug 3.8 Gew%.

Im Rahmen der vorliegenden Erfindung nicht umfasst werden silikahaltige Rezepturen, bei denen deprotonierte, Alkali stabilisierte wässrige Suspensionen mit pH Werten größer 7 eingesetzt werden. Ebenfalls nicht beansprucht werden chemisch, bpw. Acrylat modifizierte Silika Modifikationen, die bspw. durch Umsetzen von kolloidalem Silika mit Methacryloylpropyltrimethoxysilan (EP 0 505 737) hergestellt werden können.

Wichtig für die vorliegende Erfindung ist das Verhältnis von Silika zu Urethanacrylat. Es wurde nämlich, wie in Bsp. 3b beschrieben, gefunden, dass bei Beschichtungen mit relativ geringen Silika Gehalten, bspw. 35 Gew% Silika bzgl. Trockenfilmmasse, deutlich schlechtere Werte im Hinblick auf Trübung und Abrieb erhalten wurden. In den erfindungsgemäßen Formulierungen übersteigt dementsprechend der Silika Gehalt den Gehalt an Urethanacrylat, so dass in der getrockneten Beschichtung der Gehalt an Silika mindestens 50.1 Gew% oder mehr beträgt.

Bei b), den Urethanacrylaten handelt es sich um Reaktionsprodukte von (Meth)acrylsäuren, Polyolen und mehrfunktionellen Isocyanaten. Urethanacrylate werden hergestellt aus (Meth)Acrylolylgruppen aufweisenden Alkoholen und Di- oder Polyisocyanaten. Herstellverfahren für Urethanacrylate sind grundsätzlich bekannt und beschrieben z. B. in der DE-A-1 644 798, DE-A 2 115 373 oder DE-A-2 737 406. Unter (Meth)Acrylolylgruppen aufweisenden Alkoholen sind sowohl eine freie Hydroxylgruppe aufweisende Ester der Acrylsäure oder Methacrylsäure mit zweiwertigen Alkoholen zu verstehen wie beispielsweise 2-Hydroxyethyl-, 2 oder 3-Hydroxypropyl oder 2-, 3-, 4-, Hydroxybutyl-(meth)acrylat als auch beliebige Gemische derartiger Verbindungen. Außerdem kommen auch einwertige (Meth)-Acryloylgruppen aufweisende Alkohole oder im wesentlichen aus derartigen Alkoholen bestehende Umsetzungsprodukte in Betracht, die durch Veresterung von n-wertigen Alkoholen mit (Meth)Acrylsäure, die durch Veresterung von n-wertigen Alkoholen mit (Meth)acrylsäure und ggf. weiteren Dicarbonsäuren erhalten werden, wobei als Alkohole auch Gemische von unterschiedlichen Alkoholen eingesetzt werden können, so dass n für eine ganze oder im statistischen Mittel gebrochene Zahl von grösser 2 bis 4, vorzugsweise 3 steht und wobei pro Mol der genannten Alkohole insbesonders bevorzugt n-1 Mol (Meth)Acrylsäure eingesetzt werden.

Weiterhin sind Umsetzungsprodukte dieser einwertigen (Meth)Acrylolylgruppen haltigen Alkohole mit Epsilon-Caprolacton einsetzbar. Bevorzugt sind sind dabei die Umsetzungsprodukte von Hydroxyalkyl(meth)acrylaten mit Epsilon-Caprolacton.

Als Di- oder Polyisocyanate sind grundsätzlich (cyclo)aliphatische, araliphatische und aromatische Verbindungen geeignet, wobei die (cyclo)aliphatischen Verbindungen bevorzugt sind z. B. Hexamethylendiisocyanat oder Isophorondiisocyanat, Trimethylhexamethylendiisocyanate, Di(isocyanatocyclohexyl)methan oder deren Derivate mit Urethan-, Isocyanurat-, Allophanat-, Biuret-, Uretdionstruktur und Mischungen derselben.

Diese werden z.B. von der Fa. Bayer MaterialScience unter dem Produktnamen Desmolux® kommerziell vertrieben.

Wegen der strukturellen Vielfalt der verfügbaren mehrfunktionellen Isocyanate und der Polyole stehen maßgeschneiderte Produkte mit einstellbaren Produkteigenschaften zur Verfügung. Bspw. können über höherfunktionale Polyole erhöhte Acrylatgehalte und damit hohe Vernetzungsdichten eingestellt werden. Durch Auswahl geeigneter mehrfunktioneller Isocyanate (in der Regel di- oder trifunktionell) können bspw. Eigenschaften wie Lichtbeständigkeit oder Flexibilität beeinflusst werden. Derartige Urethanacrylate sind üblicherweise in organischen Lösemitteln, wie Alkoholen oder Estern löslich. Durch Verwendung von sehr hydrophilen Polyolkomponenten, bspw. ethoxylierten Einheiten, ist es jedoch auch möglich, Wasser dispergierbare Produkte herzustellen. Bspw. ist unter dem Namen Desmolux® KPP 11 376 ein derartiges Produkt erhältlich.

Je nach Auswahl der einzelnen Bausteine können die Desmolux® Urethanacrylate unterschiedliche Molekulargewichte aufweisen, die vzgw. im Bereich von 200 - 3000 g/mol, besonders bevorzugt im bereich von 300 - 1000 g/mol liegen. Die Desmolux® Urethanacrylat Systeme werden in Substanz oder in Kombination mit sog. Reaktiwerdünneren angeboten. Bei Reaktivverdünnern handelt es sich definitionsgemäß um Verdünnungsmittel, die beim Härtungsprozess der Beschichtung Bestandteil des Bindemittels werden. Es handelt sich hierbei um niedermolekulare mehrfunktionelle Acrylate, wobei Hexandioldiacrylat (HDDA) das am häufigsten eingesetzte Produkt ist. Neben HDDA werden in der Desmolux® Produktserie auch hydrophile Reaktiwerdünner, wie Dipropylenglykoldiacrylat (DPGDA) oder Tripropylenglykoldiacrylat (TPGDA) angeboten. Weitere Beispiele für hydrophile, bzw. Tensid artige Acrylate sind Polyethylenglykol-600-diacrylat, Nonylphenol(EO)$_x$acrylat oder Isobornylacrylat. Weitere Informationen über Reaktiwerdünner, sowie generelle Hintergründe über Strahlen härtende Lacksysteme, finden sich in P. Garrat, "Strahlenhärtung", Vincentz, Hannover 1996).

Ausgehend vom lösemittelfreien Urethanacrylat Desmolux® U 100 (ungesättigtes aliphatisches Urethanacrylat, ohne Reaktiwerdünner, Viskosität bei 23 °C: 7500 +/- 2000 mPas, Hydroxylgehalt: ca. 0.3, Bayer MaterialScience AG, Deutschland) wurde nun, wie im Beispiel 1 beschrieben, vollkommen überraschend gefunden, dass das Eigenschaftsprofil der Beschichtung durch den Zusatz von nicht modifizierten, protonierten Silika Nanopartikeln insbesondere hinsichtlich Abriebverhalten und Lösemittelbeständigkeit (genaue Beschreibung dieser Testmethode bei den Beispielen) enorm verbessert werden kann. So zeigt ein Lack aus konventionellem Desmolux® U 100 auf Polycarbonat Substraten (bspw. Makrolon® M 2808) schon nach 100 Abriebzyklen einen hohen Trübungswerte von über 40% Haze, während mit den entsprechenden Silika haltigen Rezepturen Beschichtungen mit geringen Abriebwerten von weniger als 5% Haze erreicht werden konnten. Allerdings zeigten diese Beschichtungen, ähnlich wie konventionelle Desmolux®-Lacke, eine noch geringe Lösemittel Stabilität. Diese Nachteile (Lösemittel und Chemikalienstabilität) konnten nun dadurch drastisch verbessert werden, dass die Urethanacrylate in Kombination mit dem Reaktiwerdünner Hexandioldiacrylat (HDDA) eingesetzt wurde. Beim Langzeittest (Kochtest, eine genauere Beschreibung findet sich bei den Bsp.) wurde jedoch eine weitere limitierende Lackeigenschaft festgestellt. Während sowohl die Haftung als auch die Transparenz der Lackschicht einen 4 h Kochtest in Wasser (100°C) schadlos überstanden, konnten nach ca. 1,5 h Kochtest unter der Lupe Haarrisse festgestellt werden. Es wurde nun vollkommen überraschenderweise gefunden, dass diese Nachteile (Haarrissbildung) dadurch unterbunden werden können, dass OH funktionelle Reaktiwerdünner, bspw. Pentaerythrittriacrylat (PETA) oder Dipentaerythrit-penta/hexaacrylat (DPHA) bzw. ein Gemisch dieser beiden in Kombination mit Desmolux® U 100 eingesetzt wurde. Bei dem bevorzugt eingesetzten Urethanacrylat Desmolux® U 100 handelt es sich einen Reaktiwerdünner freien UV und Elektronenstrahl härtenden Lack mit folgenden Spezifikationen: Viskosität bei 23°C: 7500 +/- 2000 mPas, Säurezahl: < 2 mg KOH/g, Hydroxylgehalt: ca. 0,3 %, Dichte: 1,13 g/ml und flammpunkt: > 100 °C.

Somit beinhalten die bevorzugten Rezepturen der vorliegenden Erfindung Urethanacrylate, protonierte Silika Nanopartikel in polaren Lösemitteln, Reaktiwerdünner und UV Initiatoren, wobei die Urethanacrylate vzgw. aliphatisch und die Reaktiwerdünner vorzugsweise OH funktionell sind.

Derartige Rezepturen ergeben im Vergleich zum Stand der Technik Beschichtungen, die hinsichtlich Verfügbarkeit der Rohstoffe, mechanischen Eigenschaften, wie Abrieb und Kratzfestigkeit, optischen Eigenschaften, wie Transmission, bzw. Trübung, und Yellowness Index YI sowie Stabilität gegen Chemikalien und Lösemittel verbesserte Eigenschaften aufweisen. Weitere neuartige Eigenschaften ergeben sich bei Rezepturen, bei denen der Silika Nanopartikelgehalt den Bindemittelgehalt übersteigt. Infolge erhöhter Hydrophilie können Eigenschaften, wie reduzierte Elektrostatik oder, wie in Bsp. 4b beschrieben, Affinität zu Wasser löslichen kationischen Verbindungen, bspw. kationische Polyelektrolyte, erreicht werden.

Auch bei der Komponente c), dem polaren Lösemittel, besteht eine breite Auswahlmöglichkeit. Hauptkriterium ist, dass sowohl die Silika Nanopartikel als auch das Bindemittel im selben Lösemittel bzw. Lösemittel Gemisch kompatibel sind. Wie bereits im Abschnitt "kommerziell verfügbare Silika Nanopartikel" beschrieben, kommen insbesondere Alkohole, wie Methanol, Ethanol, Isopropanol, Ethylenglykol, Propylenglykol (1,2-Propandiol), Propylglykol (Ethylenglykol-n-propylether), Methoxypropanol (MOP, 1-Methoxy-2-propanol) oder Diacetonalkohol (4-Hydroxy-4-methyl-2-pentanon), Ketone, wie Aceton, Methylethylketon, Methylisobutylketon, Ester, wie Ethylacetat, Butylacetat und Propylenglykolmonomethyletheracetat, Ether, wie Ethylenglykol-n-propylether, Tetrahydrofuran, sowie amidische Lösemittel, wie N,N-Dimethylacetamid oder N-Methylpyrrolidon in Frage. Es können natürlich auch Lösemittelgemische eingesetzt werden, wobei auch geringe Mengen von an sich in reiner Form nicht geeigneten Lösemitteln, wie Toluol enthalten sein können.

Bei den Komponenten d), den Photoinitiatoren, sowie den Beschichtungsadditiven besteht ebenfalls eine große Auswahlmöglichkeit. Hinsichtlich Photoinitiatoren ist eine breite Produktpalette in der CIBA Firmenbrochure "Photoinitiators for UV Curing" beschrieben. Es handelt sich hierbei um Systeme, die an der Luft oder unter Inertgas die Polymerisation der (Meth)acrylatkomponenten unter Einstrahlung von UV Licht initiieren. Derartige Systeme, die üblicherweise in einigen Gew% (ca. 2 bis 10) bzgl. der eingesetzten Acrylatmenge zugesetzt werden, sind bspw. unter dem Produktnamen "Irgacure® oder Darocure® erhältlich. Häufig werden auch Gemische, wie bspw. Irgacure 184/Darocure TPO eingesetzt. Hierbei ist Irgacure 184® Hydroxy-cyclohexyl-phenyl-keton, und Darocure TPO® Diphenyl (2,4,6-trimethylbenzoyl)-phosphinoxid).

Als typische Beschichtungsadditive kommen sog. Verlaufsmittel, wie BYK® Additive, Tenside, wie Aerosol® OT , Dapro® U 99 oder nichtionische Tenside, wie Pluronic PE 6400 oder Surfynol 465 in Frage. Außerdem können Stabilisatorsysteme gegen UV Licht, wie Triazole in Kombination mit sterisch gehinderten Aminen als Rezepturbestandteile enthalten sein.

Hinsichtlich Substrate werden mit den erfindungsgemäßen Formulierungen die größten Vorteile bei thermoplastischen Artikeln erzielt. Aber auch bei anderen Substraten, wie Holz, Keramik, Leder, Metall, Textilien oder Glas können erhebliche Eigenschaftsverbesserungen generiert werden. Insbesondere bei Substraten, wie Prismen, Linsen oder Brillengläsern, die Licht brechende Funktionen aufweisen sollen, können die erfindungsgemäßen Silika haltigen Beschichtungen von großem Interesse sein. So gibt es Anwendungen, bspw. hinsichtlich "antireflex" Eigenschaften oder IR Reflexion, bei denen eine Abfolge von hoch- und niedrig-brechenden Schichten von Interesse ist. Wegen des niedrigen Brechungsindex (n) von Silika von ca. 1.45, im Vergleich zu Polycarbonat von 1.56 kommen die erfindungsgemäßen Formulierungen mit hohen Silika Gehalten für derartige Anwendungen als niedrig brechende Schicht in Frage. So wurde, wie in Bsp. 5 beschrieben, überraschenderweise gefunden, dass die erfindungsgemäßen Beschichtungen mit hohen Silika Gehalten Brechungsindexwerte erreichen können, die deutlich unter dem Wert des reinen Bindemittelsystems liegen.

Wegen der exzellenten "transparenten Protektiveigenschaften" der neuartigen Lacksysteme, sind jedoch transparente Substrate bevorzugt. Hierbei sind transparente thermoplastische Polymere beispielsweise aus Polycarbonat (Makrolon®, Apec®) oder Polycarbonatblends (Makroblend®, Bayblend®), Polymethylmethacrylat (Plexiglas®), Polyester, cycloaliphatische Olefine, wie Zeonor®, sowie Glas ganz besonders bevorzugt.

Polycarbonate für die erfindungsgemäßen Zusammensetzungen sind Homopolycarbonate, Copolycarbonate und thermoplastische Polyestercarbonate.

Die Polycarbonate und Copolycarbonate haben im Allgemeinen mittlere Molekulargewichte (Gewichtsmittel) von 2 000 bis 200 000, bevorzugt 3 000 bis 150 000, insbesondere 5 000 bis 100 000, ganz besonders bevorzugt 8 000 bis 80 000, insbesondere 12 000 bis 70 000 (bestimmt nach GPC mit Polycarbonat-Eichung).

Zur Herstellung von Polycarbonaten für die erfindungsgemäßen Zusammensetzungen sei beispielhaft auf "Schnell", Chemistry and Physics of Polycarbonats, Polymer Reviews, Vol. 9, Interscience Publishers, New York, London, Sydney 1964, auf D.C. PREVORSEK, B.T. DEBONA and Y. KESTEN, Corporate Research Center, Allied Chemical Corporation, Moristown, New Jersey 07960, "Synthesis of Poly(ester)carbonate Copolymers" in Journal of Polymer Science, Polymer Chemistry Edition, Vol. 19, 75-90 (1980), auf D. Freitag, U. Grigo, P.R. Müller, N. Nouvertne, Bayer AG, "Polycarbonates" in Encyclopedia of Polymer Science and Engineering, Vol. 11, Second Edition, 1988, Seiten 648-718 und schließlich auf Dres. U. Grigo, K. Kircher und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen. Die Herstellung erfolgt vorzugsweise nach dem Phasengrenzflächenverfahren oder dem Schmelze-Umesterungsverfahren.

Bevorzugt sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan. Diese oder andere geeignete Bisphenolverbindungen werden mit Kohlensäureverbindungen, insbesondere Phosgen oder beim Schmelzeumesterungsprozess Diphenylcarbonat bzw. Dimethylcarbonat, unter Bildung der jeweiligen Polymere umgesetzt.

Die Schichtdicken der erfindungsgemäßen Beschichtungen liegen üblicherweise im Bereich von 0.5 bis 500 $\mu$m, vzgw. zwischen 1 und 50 $\mu$m und ganz besonders bevorzugt zwischen 2 und 25 $\mu$m. Bei Schichten mit Licht brechenden Funktionen sind darüber hinaus deutlich kleinere Werte, bspw. im Bereich von 50 bis 500 nm vzgw. zwischen 100 und 250 nm von Interesse.

Hinsichtlich Lack-Applikation kommen die an sich bekannten Methoden, wie Fluten, Rakeln, Antrag über Ein- oder Mehrwalzensysteme, Sprühen oder spincoating in Frage.

Gegenstand der vorliegenden Erfindung ist weiterhin die Verwendung der erfindungsgemäßen Zusammensetzung zur Beschichtung von Oberflächen sowie ein Verfahren zur Beschichtung der Oberflächen, dadurch gekennzeichnet, dass die erfindungsgemäße Zusammensetzung auf eine Oberfläche aufgebracht wird und mit UV-Licht bestrahlt wird. Ferner sind Formkörper, aufweisend eine Oberfläche, die mit der erfindungsgemäßen Zusammensetzung beschichtet sind, Gegenstand der vorliegenden Erfindung.

### Beispiele

Vor den Versuchsvorschriften werden zunächst die Lackapplikationssubstrate sowie die entsprechenden Prüfmethoden beschrieben:

### Substrate:

Substrat 1: Makrolon® M 2808 Platte (Bisphenol A Polycarbonat: mittelviskoses Bisphenol A-Polycarbonat, MFR 10 g/10min nach ISO 1133 bei 300°C und 1,2kg, ohne UV-Stabilisierung und Formtrennmittel).

Substrat 2: Makrolon® AI 2647 Platte (mittelviskoses Bisphenol A-Polycarbonat mit UV-Stabilisator und Formtrennmittel; MFR 13 g/10min nach ISO1133 bei 300°C und 1,2kg).

### Testmethoden:

Schichtdicke : Mittels Weißlichtinterferometer (ETA SPB-T, ETA-Optik GmbH).

Haftung: Nach DIN EN ISO 2409: Gitterschnittprüfung. Bspw. bedeutet ein Gitterschnitt Kennwert 0, dass alle Schnittränder vollkommen glatt sind und keines der Gitterschnittquadrate abgeplatzt ist. Gitterschnitt 5: Alle Gitterschnittquadrate sind abgeplatzt.

Trübung: Die Trübung (Haze) wird nach ASTM D 1003-00 über Weitwinkel Lichtstreuung ermittelt. Die Angaben erfolgen in %Haze (H), wobei niedrige Werte, bspw. 0.5% H niedrige Trübung, bzw. hohe Transparenz bedeuten.

Abrasionstest: Mittels Reibradverfahren wird die Verschleißfestigkeit (Abrieb) über die Zunahme des Streulichts bestimmt. Eingesetzt wurde ein Taber Abrasionsgerät Modell 5151 mit CS-10F Calibrase Reibräder (Typ IV) mit 500 g Auflagegewicht pro Rad. Die Haze Werte werden bspw. nach 500 oder 1000 Zyklen gemessen, wobei niedrige Werte, bspw. 0.5 % H eine gute Abriebbeständigkeit bedeuten.

Yellowness Index (YI): Der YI Test ist ein Maß für die Vergilbung der Testprobe durch UV Licht. Niedrige Werte, bspw. YI:0.5 bedeuten eine geringe Vergilbung.

**Langzeitstabilität und Bewitterungstests**

Hinsichtlich Langzeitbeständigkeit werden die o.g. Testkriterien bspw. nach folgenden Stressbedingungen ermittelt:

Wasserlagerung: Die Probe wird nach ASTM 870-02 über 10 Tage in 65+/- 2 °C warmem Wasser gelagert, wobei täglich o. g. Tests durchgeführt werden.

Kochtest: Die Proben werden in kochendes Wasser gelegt, wobei nach 0.5, 1, 2, 3, und 4 h o.g. Werte ermittelt werden. Werden bspw. 4 h Kochtest schadlos passiert, kann eine gute Langzeitbeständigkeit prognostiziert werden.

Bewitterung: Im Vergleich zum Naturversuch erfolgt eine beschleunigte Ermittlung der Belichtungs-/Bewitterungsstabilität von Werkstoffen. Mit sog. Wheater-Ometern® können die wichtigsten Klimafaktoren (Strahlung, Wärme, Feuchte, Regen) simuliert werden. Bspw. erfolgt der sog. Xenon WOM nach ASTM G 155, der Xenon High Energie Test nach DIN EN ISO 4892-2.

Beispiel 1: Urethanacrylat ohne Reaktiwerdünner mit und ohne Silika

a) ohne Silika
30.0 g Desmolux® U 100
1,2 g Irgacure® 184
0,3 g Darocure® TPO und
94,5 g Methoxypropanol (MOP, 1-Methoxy-2-propanol)
wurden unter Rühren gelöst und durch ein 3 $\mu$m Papierfilter filtriert.

b) mit Silika
10,0 g Desmolux U 100 (Bayer MaterialScience)
44,2g 1-Metoxy-2-propanol (MOP, KMF)
0,4 g Irgacure 184 (CIBA)
0,1 g Darocure TPO (CIBA) und
65,8 g Highlink 401-31 (Silika Nanopartikel, 30 Gew% in Propylglykol, Clariant)
wurden durch Rühren homogenisiert, über ein 3 $\mu$m Papierfilter filtriert und in eine dunkle Flaschen abgefüllt.

**Beschichtung der Substrate:**

Die Substrate 1 (PC M 2808) und 2 (Al 2647) mit den Dimensionen 10 x 15 cm wurden durch Fluten mit den Gießlösungen 1a) und 1b) beschichtet. Das Lösemittel wurde 10 min. bei 80°C im Trockenschrank abgedampft.

**UV Vernetzung:**

Die beschichteten Substrate wurden einer UV Vernetzung (Hg Lampe, ca. 1J/cm$^2$) unterzogen.

Rechnerischer Silika Gehalt im Trockenfilm: 65 Gew%.

Die Ergebnisse sind in der folgenden Tabelle vergleichend dargestellt:

| Substrat: 1 (M 2808) | Urethanacrylat ohne Silika: 1a) | Uretanacrylat mit Silika: 1b) |
|---|---|---|
| Schichtdicke ($\mu$m) * | 1,7 - 4,9 | 1,2 - 4,0 |
| % Haze | 8,3 | 0,18 |
| % Haze nach 1000 Zyklen | > 50 | 6,39 |
| Haftung (Gittertest) | 0 | 0 |
| Gittertest (Haftung) nach 4 h Kochtest | 0 | 0 |

(fortgesetzt)

| Substrat: 1 (M 2808) | Urethanacrylat ohne Silika: 1a) | Uretanacrylat mit Silika: 1b) |
|---|---|---|
| Acetonbeständigkeit ** | Quillt stark mit Aceton | Quillt stark mit Aceton |

* Der Schichtdickengradient resultiert aus dem Flutprozess, der von oben nach unten eine zunehmende Schichtdicke zur Folge hat.
** Die Lösemittelbeständigkeit wurde durch Reiben der Lackoberfläche mit einem Aceton getränkten Wattebausch getestet und visuell beurteilt.

Beide Lacke wurden auf die Substrate 1 und 2 appliziert, wobei innerhalb der Messgenauigkeit keine erheblichen Unterschiede festgestellt wurden, sodass nur die Ergebnisse von Substrat 1 dargestellt sind. Dieser Vergleich zeigt, dass das an sich schwieriger zu beschichtende Substrat 2 (AI 2647), auch mit der Silika Rezeptur, sehr gute Haftung und Langzeitbeständigkeit aufweist.

Die in der Tabelle dargestellten Ergebnisse können folgendermaßen interpretiert werden:

- % Haze: Die Silika haltige Beschichtung weist überraschender- und vorteilhafter weise einen niedrigeren Trübungswert auf als die entsprechende Silika freie Version.
- % Haze nach 1000 Zyklen: Die Silika haltige Beschichtung zeigt deutlich bessere , d.h. kleinere Abriebwerte als die Silika freie Lackschicht.
- Haftung und Kochtest: In beiden Fällen werden hervorragende Haftung und Langzeitzeitbeständigkeit gefunden. D.h., die bei vernetzten Urethanacrylaten bekannte gute Haftung auf Kunststoff Substraten wird durch den hohen Silika Gehalt nicht negativ beeinflusst.
- Nach dem Aceton Test zeigen beide Beschichtungen keine nennenswerte Lösemittelbeständigkeit.

Beispiel 2: Urethanacrylat mit Reaktiwerdünner HDDA mit und ohne Silika

a) ohne Silika
18,0 g Desmolux® U 100
2,0 g Hexandioldiacrylat (HDDA, Aldrich)
63,2 g Diacetonalkohol (4-Hydroxy-4-methyl-2-pentanon, Acros)
0,8 g Irgacure 184® und
0,2 g Darocure TPO®
wurden durch Rühren homogenisiert, über ein 3 $\mu$m Papierfilter filtriert und in eine dunkle Flaschen abgefüllt.

b) mit Silika
8,0 g Desmolux® U 100,
2,0 g Hexandioldiacrylat (HDDA, Aldrich)
53,2 g Highlink® 401-31 (Silika Nanopartikel 63 Gew% in n-Propylglykol, Fa. Clariant)
42,0 g Diacetonalkohol
0,4 g Irgacure 184® und
0,1 g Darocure TPO®
wurden, wie unter a) beschrieben, gelöst.
**Beschichtung und UV Vernetzung:** Wie bei Bsp. 1.
Rechnerischer Silika Gehalt im Trockenfilm: 65 Gew%

Die Ergebnisse sind in der folgenden Tabelle vergleichend dargestellt:

| Substrat: 1 (M 2808) | 2a: Urethanacrylat/HDDA ohne Silika | 2b: Uretanacrylat/HDDA mit Silika |
|---|---|---|
| Schichtdicke ($\mu$m) * | 1,7 - 4,9 | 1,3 - 3,7 |
| % Haze | 0, 55 | 0,31 |
| % Haze nach 1000 Zyklen | 44,2 | 5,39 |
| Haftung (Gittertest) | 0 | 0 |

(fortgesetzt)

| Substrat: 1 (M 2808) | 2a: Urethanacrylat/HDDA ohne Silika | 2b: Uretanacrylat/HDDA mit Silika |
|---|---|---|
| Gittertest (Haftung) nach 4 h Kochtest | 0 | 0, Haarrisse nach 1,5 h Kochtest |
| Acetonbeständigkeit | Quillt nicht mit Aceton | Quillt nicht mit Aceton |

\* Der Schichtdickengradient resultiert aus dem Flutprozess, der von oben nach unten eine zunehmende Schichtdicke zur Folge hat.

\*\* Die Lösemittelbeständigkeit wurde durch Reiben der Lackoberfläche mit einem Aceton getränkten Wattebausch getestet und visuell beurteilt.

Beide Lacke wurden auf die Substrate 1 und 2 appliziert, wobei innerhalb der Messgenauigkeit keine erheblichen Unterschiede festgestellt wurden, sodass nur die Ergebnisse von Substrat 1 dargestellt sind. Dieser Vergleich zeigt, dass das an sich schwieriger zu beschichtende Substrat 2 (AI 2647), auch mit der Silika Rezeptur, sehr gute Haftung und Langzeitbeständigkeit aufweist.

Die in der Tabelle dargestellten Ergebnisse können folgendermaßen interpretiert werden:

- % Haze: Die Silika haltige Beschichtung weist überraschender- und vorteilhafterweiseweise einen niedrigeren Trübungswert auf als die entsprechende Silika freie Version.
- % Haze nach 1000 Zyklen: Die Silika haltige Beschichtung zeigt deutlich günstigere (kleinere) Abriebwerte als die Silika freie Lackschicht.
- Haftung und Kochtest: In beiden Fällen werden hervorragende Haftung und Langzeitzeitbeständigkeit gefunden. D.h., die bei vernetzten Urethanacrylaten bekannte gute Haftung auf Kunststoff Substraten wird durch den hohen Silika Gehalt nicht negativ beeinflusst. Allerdings traten bei der Silika haltigen Rezeptur 2b) nach 1,5 h Kochtest Haarrisse auf.
- Nach dem Aceton Test zeigen beide Beschichtungen eine gute Lösemittelbeständigkeit.

Beispiel 3: Urethanacrylat mit OH haltigem Reaktiwerdünner und Silika

3a: Silika Gehalt: 65 Gew%
6,0g Dipentaerythritpenta/hexaacrylat (DPHA, Aldrich)
72,0g 1 Methoxy-2-propanol (MOP, KMF)
9,0 g Desmolux U 100®
0,6 g Irgacure 184®
0.15g Darocure TPO® und
122,5g Highlink® 401-31 (Clariant)
wurden durch Rühren homogenisiert, über ein 3 $\mu$m Papierfilter filtriert und in eine dunkle Flaschen abgefüllt.
Beschichtung der Substrate und UV Vernetzung: Wie Bsp. 1
Rechnerischer Silika Gehalt im Trockenfilm: 70 Gew%

Die Ergebnisse sind in der folgenden Tabelle dargestellt:

| | Bsp. 3a: Urethanacrylat/OH funktioneller Reaktiwerdünner/hoher Silika Gehalt |
|---|---|
| Schichtdicke ($\mu$m) \* | 1,3 - 3,6 |
| % Haze | 0,18 |
| % Haze nach 1000 Zyklen | 4,89 |
| Haftung (Gittertest) | 0 |
| Gittertest (Haftung) nach 4 h Kochtest | 0, keine Rissbildung |

(fortgesetzt)

| | Bsp. 3a: Urethanacrylat/OH funktioneller Reaktiwerdünner/hoher Silika Gehalt |
|---|---|
| Acetonbeständigkeit | Quillt nicht |

| * Der Schichtdickengradient resultiert aus dem Flutprozess, der von oben nach unten eine zunehmende Schichtdicke zur Folge hat. <br> ** Die Lösemittelbeständigkeit wurde durch Reiben der Lackoberfläche mit einem Aceton getränkten Wattebausch getestet und visuell beurteilt. |
|---|

Beide Lacke wurden auf die Substrate 1 und 2 appliziert, wobei innerhalb der Messgenauigkeit keine erheblichen Unterschiede festgestellt wurden, sodass nur die Ergebnisse von Substrat 1 dargestellt sind. Dieser Vergleich zeigt, dass das an sich schwieriger zu beschichtende Substrat 2 (Al 2647), auch mit der Silika Rezeptur, sehr gute Haftung und Langzeitbeständigkeit aufweist.

Die in der Tabelle dargestellten Ergebnisse können folgendermaßen interpretiert werden:

- % Haze: Die Silika haltige Beschichtung weist überraschender- und vorteilhafterweise einen sehr niedrigeren Trübungswert.
- % Haze nach 1000 Zyklen: Der niedrige Wert von unter 5%H weist auf eine Beschichtung mit hervorragender Abriebbeständigkeit hin.
- Haftung und Kochtest: In beiden Fällen werden hervorragende Haftung und Langzeitzeitbeständigkeit gefunden. D.h., die bei vernetzten Urethanacrylaten bekannte gute Haftung auf Kunststoff Substraten wird durch den hohen Silika Gehalt nicht negativ beeinflusst. Im Vergleich zum Kochtest aus Bsp. 2 konnten selbst nach 4 h Kochen keine Lackdefekte, wie Rissbildung, festgestellt werden.
- Nach dem Aceton Test zeigen beide Beschichtungen eine sehr gute Lösemittelbeständigkeit.

3b: Silika Gehalt: 35 Gew%
6,0g Dipentaerythritpenta/hexaacrylat (DPHA, Aldrich)
53,0g 1 Methoxy-2-propanol (MOP, KMF)
9,0 g Desmolux U 100®
0,6 g Irgacure 184®
0.15g Darocure TPO® und
28,3g Highlink® 401-31 (Clariant)
wurden durch Rühren homogenisiert, über ein 3 $\mu$m Papierfilter filtriert und in eine dunkle Flaschen abgefüllt.
Beschichtung der Substrate und UV Vernetzung: Wie Bsp. 1
Rechnerischer Silika Gehalt im Trockenfilm: 35 Gew%

Die Ergebnisse sind in der folgenden Tabelle dargestellt:

| | Bsp. 3b: Urethanacrylat/OH funktioneller Reaktiwerdünner/niedriger Silika Gehalt |
|---|---|
| Schichtdicke ($\mu$m) * | 1,7 - 5,6 |
| % Haze | 3,45 |
| % Haze nach 1000 Zyklen | 18,5 |
| Haftung (Gittertest) | 0 |
| Gittertest (Haftung) nach 4 h Kochtest | 0, keine Rissbildung |
| Acetonbeständigkeit | Quillt mit Aceton |

Wie aus den Ergebnissen ersichtlich wird, zeigt die Lackbeschichtung mit einem reduzierten Silika Gehalt erheblich schlechtere Werte bzgl. Trübung (% Haze), Abriebbeständigkeit (% Haze nach 1000 Zyklen) sowie Lösemittelbeständigkeit.

Vergleicht man die Ergebnisse aus den Bsp. 1-3 so wird ersichtlich, dass die in der Tabelle aufgeführten Testkriterien alle gleichzeitig optimal erreicht werden, wenn die Rezepturen neben Urethanacrylat hohe Silika Gehalte und OH fuktionelle Reaktiwerdünner enthalten.

Beispiel 4: Hydrophile Hardcoat-Beschichtung mit negativ geladener Oberfläche und antifog Eigenschaften

4,0 g Pentaerythritol-triacrylat (PETA, Aldrich)
6,0 g Desmolux® U 100,
0,4 g Irgacure® 184,
0,1 g Darocure® TPO,
71,2 g Highlink® 401-31,
1,0 g Aerosol® OT (Dioctylsulfosuccinat Na, DSSNa, Fa. Cytec) und
136,0 g 1- Methoxy -2- propanol
wurden unter Rühren gelöst und über ein 3 $\mu$m Papierfilter filtriert.

Die Beschichtung der Substrate und die UV Vernetzung erfolgten durch Fluten analog zu Bsp. 1.
Rechnerischer Silika Gehalt im Trockenfilm: 65 Gew%
Rechnerischer Tensid (DSSNa) Gehalt im Trockenfilm: 3 Gew%
Es wurden folgende Lackeigenschaften ermittelt:

Schichtdicke: 0,9 - 2,0 $\mu$m
Haze %: 0,14
% Haze nach 1000 Zyklen: 11,4

4a: Ermitteln der anti fog Eigenschaften

- Anhauchen: Nach Anhauchen der beschichteten Substratoberfläche konnte kein Beschlagen festgestellt werden, während beim Vergleichsmuster (Beschichtung aus Bsp. 3, ohne Tensid) eine durch kondensierten Wasserdampf getrübte Oberfläche erhalten wurde.
- Gewächshaus Test: In ein Mini-Gewächshaus, in dessen Inneren eine Luftfeuchtigkeit von annähernd 100 % eingestellt war, wurde die in Bsp. 4 beschriebene, DSSNa haltige Probe für 6 h exponiert. Als Vergleichsmuster diente eine Tensid freie Beschichtung aus Bsp. 3. Während beim Vergleichsmuster sofort eine anhaltende Trübung festgestellt werden konnte, blieb das Muster mit der Tensid haltigen Beschichtung aus Bsp. 4 absolut transparent. Nach der 6 stündigen Exposition wurde die Probe 4 h bei 40 °C getrocknet und erneut für 6 h der hohen Luftfeuchtigkeit ausgesetzt. Auch hierbei konnte keinerlei Trübung festgestellt werden. Diese Feucht/Trocken Zyklen wurden insgesamt noch 10 mal wiederholt, wobei in allen Fällen die Transparenz (anti fog Eigenschaften) vollständig erhalten blieb.

4b: Beschichtung der hydrophilen, negativ geladenen Oberfläche mit kationischen Polymeren nach dem Polyelektrolyt - Monolayer Konzept.

Ein Polykarbonat Substrat mit der Beschichtung aus Bsp. 4 wurde 10 Min. lang in folgende 0.1 %ige wässrige Polymerlösungen (kationische Polyelektrolyte) getaucht: Polyallylamin-Hydrochlorid (PAH), Chitosan Hydroacetat und Polydiallyldimethylammmonium-Hydrochlorid (PDADMAC). Anschließend wurden die getauchten Oberflächen mit Wasser abgewaschen und 10 Min. im Umlufttrockenschrank bei 80°C getrocknet.
Der Funktionstest hinsichtlich Adsorption der kationischen Polyelektrolyte erfolgte mit Hilfe von 0.1 %igen, wässrigen, ionischen Farbstoff-Lösungen: Die mit den kationischen Polyelektrolyten modifizierten Substrate wurden ca. 1 Min. in die negativ geladene, blaue Farbstoff Lösung Erioglaucin getaucht und anschließend mit Wasser gewaschen. Es konnte eine gleichmäßige Blaufärbung festgestellt werden. Im Vergleichsversuch wurden dieselben Substrate in die kationische, blaue Farbstoff Lösung Methylenblau getaucht und gewaschen. Hierbei erfolgte keine Anfärbung. In einem weiteren Vergleichsversuch wurden die nicht modifizierten Substrate aus Bsp. 4 (negativ geladene Oberfläche) in dieselbe Farbstoff Lösungen getaucht, wobei die gegenteiligen Effekte beobachtet werden konnten: Es erfolgte eine starke Anfärbbarkeit mit der kationischen Farbstoff Lösung Methylenblau, während die anionische Farbstoff Lösung Erioglaucin keinerlei Anfärbbarkeit zeigte.

Beispiel 5: Ermittlung des Brechungsindex

5a: Die in Bsp. 3 beschriebene Rezeptur mit einem Silika Gehalt von 70 Gew% wurde mit Hilfe eines spin coaters auf Quarzglas Objektträger aufgeschleudert, wobei Schichtdicken von ca. 300 nm erhalten wurden. Die Ermittlung des Brechungsindex Wertes erfolgte nach der in BMS 06 1 073 detailliert beschriebenen Methode:

Das Transmissions- und Reflexionsspektrum Beschichtung wurde mit einem Spektrometer der Firma STEAG ETA-Optik, CD-Measurment System ETA-RT gemessen und danach die Schichtdicke und der spektrale Verlauf von n und k an die gemessenen Transmissions- und Reflexionsspektren angepasst. Dies geschieht mit der internen Software des Spektrometers und erfordert zusätzlich die n und k Daten des Quarzglassubstrates,

die in einer Blindmessung vorab bestimmt wurden. k hängt mit der Abklingkonstante der Lichtintensität a wie folgt zusammen:

$$k = \frac{\lambda \cdot \alpha}{4\pi}$$

$\lambda$ ist die Wellenlänge des Lichtes.

Bei der Silka haltigen Rezeptur aus Bsp. 8 (70 Gew% Silika) wurde bei der Wellenlänge 750 nm ein Brechungsindex von 1.48 ermittelt.

5b: Im Vergleichsversuch wurde eine Urethanacrylat Beschichtung ohne Silika hergestellt: 18,0 g Desmolux® U 400 und
1,0 g Irgacure® 184 wurden in
86,0 g Methoxypropanol gelöst und in analog zu Bsp. 5a auf Quarz Objektträger beschichtet und hinsichtlich Brechungsindex untersucht. Es wurde ein Wert n von 1,54 bei 750 nm Wellenlänge ermittelt.

Die Ergebnisse zeigen, dass durch den hohen Silika Gehalt der Brechungsindex erheblich (um 0,06 Einheiten) reduziert werden kann.

Beispiel 6: Silika haltige Formulierung mit Desmolux® VP LS 2266 und dem Reaktiwerdünner PETiA

6,0 g Pentaerythritol-triacrylat (PETiA, Fa. Aldrich),
9,0 g Desmolux® VPLS 2266 (Bayer MaterialScience),
0,6 g Irgacure 184®,
0,15 g Darocure® TPO,
99,0 g Highlink® 401-31,
0,27 g Dioctylsulfosuccinat (DSSNa) und
68,0 g 1-Methoxy-2-propanol wurden unter rühren gemischt und über ein 3 μm Papierfilter filtriert.

Die Beschichtung und die UV Vernetzung erfolgten in Analogie zu Bsp. 1.
Rechnerischer Silika Gehalt im Trockenfilm: 65 Gew%
Desmolux® VPLS 2266: Ungesättigtes aromatisches Epoxiacrylat, Viskosität bei 23°C: 4500-8500 mPas, Hydroxylgehalt: 1,8%, Säurezahl: ca. 2 mg KOH/g
Die Ergebnisse sind in der folgenden Tabelle tabellarisch zusammengefasst:

| Parameter | Bsp. 6 |
|---|---|
| Schichtdicke (μm) * | 1,7 - 3,7 |
| % Haze | 0,24 |
| % Haze nach 1000 Zyklen | 7,9 |
| Haftung (Gittertest) | 0 |
| Gittertest (Haftung) nach 4 h Kochtest | 0, keine Rissbildung |

(fortgesetzt)

| Parameter | Bsp. 6 |
|---|---|
| Acetonbeständigkeit | Quillt nicht |

In diesem Bsp. ist im Vergleich zu Bsp. 3 ein Urethanacrylat mit einer anderen Zusammensetzung enthalten. Ansonsten enthält das System einen hohen Silika Anteil sowie einen OH funktionellen Acrylat Reaktiverdünner. Dementsprechend sind die in der Tabelle aufgeführten Testkriterien weitgehend optimal erfüllt.

**Patentansprüche**

1.  UV-vernetzbare Zusammensetzung, enthaltend

    a) nicht modifizierte, protonlerte Silika-Nanopartikel;
    b) Urethanacrylat;
    c) polares Lösungsmittel; und
    d) UV-Initiatorsystem,

    wobei der Gewiohtsanteil an nicht modifizierten, protonierten SiliKa-Nanopartlkeln den Gehalt an Urethanacrylat übersteigt und bezogen auf die Trockenmasse der Beschichtung mindestens 50.1 Gew% beträgt.

2.  Die Zusammensetzung, gemäß Anspruch 1, wobei das Urethanacrylat ein ungesättigtes aliphatisches Urethanacrylat ist.

3.  Die Zusammensetzung gemäß Anspruch 1, wobei die Zusammensetzung zusäzlich OH funktionellen Reaktivverdünner enthält.

4.  Die Zusammensetzung gemäß Anspruch 1, wobei das polare Lösungsmittel c) ein Alkohol oder amidlsches Lösungsmittel Ist.

5.  Die Zusammensetzung gemäß Anspruch 1, wobei das UV-Initiatorsystem eine Kombination aus Triazolen mit sterischgehinderten Aminen ist.

6.  Die Zusammensetzung gemäß Anspruch 1, wobei das Verhältnis der Gewichtsteile von Urethanacrylat und nicht modifizierten, protonierten Silika-Nanopartikel zwischen 25:75 (Acrylat; Silika) und 45:55 liegt.

7.  Die Zusammensetzung gemäß Anspruch 6, wobei das Verhältnis der Gewchtsteile von Urethanacrylat und nicht modifizierte, protonierte Silika-Nanopartikel zwischen 30:70 (Acrylat:Silika) und 40:60 liegt.

8.  Die Zusammensetzung gemäß Anspruch 1, wobei

    a) nicht modifizierte, pratorilerte Silika-Nanopartikel;
    b) aliphatisches Urethanacrylat;
    c) polares Lösungsmittel;
    d) UV-Initiatorsystem; und zusätzlichen einen OH-funktionellen Reaktiwerdünner enthält.

9.  Ein Verfahren zur Herstellung der Zusammensetzung nach Anspruch 1, **dadurch gekennzeichnet, dass**

    i) eine Suspension enthaltend nicht modifizierte, protonierte Silika-Nanopartikel a) hergestellt wird;
    ii) Urethanacrylat b), UV-Initiatorsystem d) und polares Lösungsmittel c) unter Lichtausschluss gemischt werden;
    iii) die Suspension aus i) und die Mischung aus ii) unter Lichtausachluss gemischt werden.

10. Das Verfahren nach Anspruch 9, **dadurch gekennzeichnet, dass** Suspension i) 5-80 Gew-% nicht modifizierte, protonierte Silika-Nanopartikel enthält, und Mischung ii) 5-60 Gew-% Urethanacrylat, 0.1-10 Gew-% UV Initiatorsystem in polarem Lösungsmitten enthält.

**11.** Verwendung der Zusammensetzung nach Anspruch 1 zur Beschichtung von Oberflächen.

**12.** Verfahren zur Beschichtung von Oberflächen, **dadurch gekennzeichnet, dass** die Zusammensetzung nach Anspruch 1 auf eine Oberfläche aufgebracht wird und mit UV-Licht bestrahlt wird.

**13.** Formkörper, aufweisend eine Oberfläche, die mit der Zusammensetzung, nach Anspruch 1 oder gemäß dem Verfahren nach Anspruch 12 beschichtet ist.

**14.** Formkörper, aufweisend eine Oberflächenbeschichtung erhältlich mit der Zusammensetzung gemäß Anspruch 1 die kolloidales Silika, vernetztes Acrylat, und UV-Initiator aufweist.

**15.** Verfahren nach Anspruch 12, **dadurch gekennzeichnet, dass** in einem nachfolgenden Schritt eine kationische oder zwitterionische Verbindung auf die Oberfläche aufgebracht wird.

**Claims**

**1.** UV-crosslinkable composition comprising

>   a) unmodified protonated silica nanoparticles;
>   b) urethane acrylate;
>   c) polar solvent; and
>   d) UV initiator system,

the weight fraction of unmodified protonated silica nanoparticles exceeding the amount of urethane acrylate and being at least 50.1 wt% based on the dry mass of the coating.

**2.** The composition according to Claim 1, the urethane acrylate being an unsaturated aliphatic urethane acrylate.

**3.** The composition according to Claim 1, the composition further comprising OH functional reactive diluent.

**4.** The composition according to Claim 1, the polar solvent c) being an alcohol or amidic solvent.

**5.** The composition according to Claim 1, the UV initiator system being a combination of triazoles with sterically hindered amines.

**6.** The composition according to Claim 1, the ratio of the parts by weight of urethane acrylate and unmodified protonated silica nanoparticles being between 25:75 (acrylate:silica) and 45:55.

**7.** The composition according to Claim 6, the ratio of the parts by weight of urethane acrylate and unmodified protonated silica nanoparticles being between 30:70 (acrylate:silica) and 40:60.

**8.** The composition according to Claim 1, comprising

>   a) unmodified protonated silica nanoparticles;
>   b) aliphatic urethane acrylate;
>   c) polar solvents;
>   d) UV initiator system; and additionally an OH-functional reactive diluent.

**9.** A method for preparing the composition according to Claim 1, **characterized in that**

>   i) a suspension comprising unmodified protonated silica nanoparticles a) is prepared;
>   ii) urethane acrylate b), UV initiator system d) and polar solvent c) are mixed with exclusion of light;
>   iii) the suspension from i) and the mixture from ii) are mixed with exclusion of light.

**10.** The method according to Claim 9, **characterized in that** suspension i) comprises 5-80 wt% of unmodified protonated silica nanoparticles, and mixture ii) comprises 5-60 wt% of urethane acrylate, 0.1-10 wt% of UV initiator system in polar solvent.

**11.** Use of the composition according to Claim 1 to coat surfaces.

**12.** Method for coating surfaces, **characterized in that** the composition according to Claim 1 is applied to a surface and irradiated with UV light.

**13.** Shaped article having a surface coated with the composition according to Claim 1 or in accordance with the method according to Claim 12.

**14.** Shaped article having a surface coating obtainable with the composition according to Claim 1, comprising colloidal silica, crosslinked acrylate, and UV initiator.

**15.** Method according to Claim 12, **characterized in that** in a subsequent step a cationic or zwitterionic compound is applied to the surface.

**Revendications**

**1.** Composition réticulable aux UV, contenant

a) des nanoparticules de silice non modifiées, protonées ;
b) un acrylate d'uréthane ;
c) un solvant polaire ; et
d) un système initiateur par les UV,

la proportion pondérale de nanoparticules non modifiées, protonées étant supérieure à la teneur en acrylate d'uréthane et représentant au moins 50,1% en poids par rapport à la masse sèche du revêtement.

**2.** Composition selon la revendication 1, l'acrylate d'uréthane étant un acrylate d'uréthane aliphatique insaturé.

**3.** Composition selon la revendication 1, la composition contenant en outre des diluants réactifs à fonctionnalité OH.

**4.** Composition selon la revendication 1, le solvant polaire c) étant un alcool ou un solvant de type amide.

**5.** Composition selon la revendication 1, le système initiateur par les UV étant une combinaison de diazoles et d'amines stériquement encombrées.

**6.** Composition selon la revendication 1, le rapport des parties en poids d'acrylate d'uréthane et de nanoparticules de silice non modifiées, protonées se situant entre 25:75 (acrylate:silice) et 45:55.

**7.** Composition selon la revendication 6, le rapport des parties en poids d'acrylate d'uréthane et de nanoparticules de silice non modifiées, protonées se situant entre 30:70 (acrylate:silice) et 40:60.

**8.** Composition selon la revendication 1, contenant

a) des nanoparticules de silice non modifiées, protonées ;
b) un acrylate d'uréthane aliphatique ;
c) un solvant polaire ;
d) un système initiateur par les UV ; et en outre un diluant réactif à fonctionnalité OH.

**9.** Procédé pour la préparation de la composition selon la revendication 1, **caractérisé en ce que**

i) une suspension contenant des nanoparticules de silice non modifiées, protonées a) est préparée ;
ii) un acrylate d'uréthane b), un système initiateur par les UV d) et un solvant polaire c) sont mélangés à l'abri de la lumière ;
iii) la suspension de i) et le mélange de ii) sont mélangés à l'abri de la lumière.

**10.** Procédé selon la revendication 9, **caractérisé en ce que** la suspension i) contient 6-80% en poids de nanoparticules de silice non modifiées, protonées et le mélange ii) contient 5-60% en poids d'acrylate d'uréthane, 0,1-10% en poids de système initiateur par les UV dans un solvant polaire.

11. Utilisation de la composition selon la revendication 1 pour le revêtement de surfaces.

12. Procédé pour le revêtement de surfaces, **caractérisé en ce que** la composition selon la revendication 1 est appliquée sur une surface et irradiée par de la lumière UV.

13. Corps façonné, présentant une surface qui est revêtue par la composition selon la revendication 1 ou selon le procédé selon la revendication 12.

14. Corps façonné présentant un revêtement de surface pouvant être obtenu par la composition selon la revendication 1, qui présente de la silice colloïdale, un acrylate réticulé et un initiateur par les UV.

15. Procédé selon la revendication 12, **caractérisé en ce que** dans une étape consécutive, un composé cationique ou zwittérionique est appliqué sur la surface.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10311639 A1
- JP 61181809 A
- JP 2005179539 A
- EP 0050996 A
- US 4499217 A
- JP 2001019874 A
- WO 2006049008 A
- US 4383057 A
- WO 2006048277 A
- EP 0337695 A
- EP 0505737 A
- JP 2007313872 A

- JP 2007010829 A
- WO 2006049296 A
- US 20051203202 A1
- US 2004191420 A1
- JP 2004277596 A
- JP 2003145689 A
- WO 20031000813 A1
- JP 2003034761 A
- DE 1644798 A
- DE 2115373 A
- DE 2737406 A

**In der Beschreibung aufgeführte Nicht-Patentliteratur**

- **P. GARRAT.** *Strahlenhärtung,* 1996
- Chemistry and Physics of Polycarbonats, Polymer Reviews. Interscience Publishers, 1964, vol. 9
- Synthesis of Poly(ester)carbonate Copolymers. **D.C. PREVORSEK ; B.T. DEBONA ; Y. KESTEN.** Journal of Polymer Science, Polymer Chemistry. Corporate Research Center, Allied Chemical Corporation, Moristown, 1980, vol. 19, 75-90

- Polycarbonates. **D. FREITAG ; U. GRIGO ; P.R. MÜLLER ; N. NOUVERTNE ; BAYER AG.** Encyclopedia of Polymer Science and Engineering. 1988, vol. 11, 648-718
- Polycarbonate. **DRES. U. GRIGO ; K. KIRCHER ; P.R. MÜLLER.** Becker/Braun, Kunststoff-Handbuch, Band 3/1, Polycarbonate, Polyacetale, Polyester, Celluloseester. Carl Hanser Verlag, 1992, vol. 3-1, 117-299